# EUROPÄISCHE PATENTSCHRIFT

(11) **EP 3 066 669 B1**
(45) Veröffentlichungstag und Bekanntmachung des Hinweises auf die Patenterteilung: **21.02.2018**
(21) Anmeldenummer: 14795804.5
(22) Anmeldetag: 03.11.2014
(51) Int. Cl.: G21F 7/06, G21F 9/04, G21F 9/22

(54) **VORRICHTUNG ZUR REPARATUR EINES SCHADENS AN DEM BODEN EINES MIT WASSER GEFÜLLTEN BEHÄLTERS**
DEVICE FOR REPAIRING DAMAGE TO THE BOTTOM OF A CONTAINER FILLED WITH WATER
DISPOSITIF DE RÉPARATION D'UN DOMMAGE SUR LE FOND D'UN CONTENEUR REMPLI D'EAU

(30) Priorität: 05.11.2013 DE 102013112136
(43) Veröffentlichungstag der Anmeldung: 14.09.2016
(73) Patentinhaber: AREVA GmbH, 91052 Erlangen (DE)
(72) Erfinder: KRÄMER, Georg, 91346 Wiesenttal (DE); MEIER-HYNEK, Konrad, 91074 Herzogenaurach (DE)
(74) Vertreter: Schlögl, Markus
(86) Internationale Anmeldenummer: PCT/EP2014/073544
(87) Internationale Veröffentlichungsnummer: WO 2015/067553

(56) Entgegenhaltungen:
- DE-A1- 3 913 202
- JP-A- 2003 156 586
- US-A1- 2010 192 368

## Beschreibung

Die Erfindung betrifft eine Vorrichtung zur Reparatur eines Schadens an dem Boden eines mit Wasser gefüllten Behälters.
So ist beispielsweise aus US 2010/0192368 A1 eine Vorrichtung zur Reparatur einer Schadstelle in einem unter Wasser befindlichen Wandbereich eines Behälters oder Beckens bekannt, welche ein entlang einer Seitenwand anbringbares und an dieser fixierbares Führungssystem aufweist. Das Führungssystem ist zum Führen eines verfahrbaren Schlittens ausgebildet, der eine verschiebbar gelagerte Aufnahme für eine Reparaturauflage aufweist. Weitere, an einer Seitenwand eines Behälters anbringbare Reparatureinrichtungen sind beispielsweise aus DE 39 13 202 A1 oder JP 2003 1516586 A bekannt.
In Behältern wird beispielsweise radioaktiv kontaminiertes Wasser aufbewahrt. Derartige Behälter weisen in der Regel eine Behälterwand, einen Deckel sowie einen Boden auf, wobei dieser durch eine Mehrzahl von Bodenelementen gebildet wird, die zumindest an zwei gegenüberliegenden Seiten mit Hilfe von sich senkrecht in den Behälter hinein erstreckenden Wandabschnitten zusammengefügt sind. Diese Wandabschnitte bilden einen Flansch, an dem die einzelnen Bodenelemente zusammengeschraubt werden. An diesen Flanschstellen können mit der Zeit Schäden auftreten, durch die das kontaminierte Wasser aus dem Behälter strömen kann. Um eine Kontamination der Umgebung des Behälters durch austretendes Wasser zu vermeiden, ist es deshalb erforderlich den Schaden zu beheben, indem die schadhafte Stelle abgedichtet wird. Um den Klebstoff an die schadhafte Stelle bringen zu können wäre es jedoch notwendig, das Wasser aus dem Behälter abzulassen, was jedoch aus abschirmungstechnischen oder anderen Gründen nicht möglich ist.

Es ist daher Aufgabe der vorliegenden Erfindung eine Vorrichtung zur Reparatur eines Schadens an dem Boden eines mit Wasser gefüllten Behälters anzugeben.

Erfindungsgemäß wird diese Aufgabe gelöst durch eine Vorrichtung mit den Merkmalen des Patentanspruches 1. Demnach umfasst die Vorrichtung eine Führungsvorrichtung, die auf dem Boden des Behälters platzierbar ist. Hierzu kann vorgesehen sein, dass die Führungseinrichtung durch eine an einer Oberseite des Behälters befindliche Öffnung in den Behälter einbringbar ist.

Die Führungsvorrichtung weist eine Zentriervorrichtung auf, mit der diese zwischen Wandabschnitten der Bodenelemente zentriert werden kann. Die Führungsvorrichtung weist ferner eine Fixiervorrichtung auf, mit der diese auf dem Boden des fixierbar ist.

Die Vorrichtung umfasst einen entlang der Führungsvorrichtung führbaren Träger, an dem mindestens ein Schwenkarm, der zwischen einer Transportstellung, in der er senkrecht zur Ebene des Bodens ausgerichtet ist und einer Arbeitsstellung, in der er parallel zur Ebene des Bodens verläuft, schwenkbar angeordnet ist. Die Vorrichtung umfasst außerdem ein Aufnahmeelement zur Aufnahme von Klebstoff, welches an einem Freiende des Schwenkarms angeordnet ist, mit dem ein Teil eines Wandabschnittes der Bodenelemente überdeckt werden kann.

Durch die erfindungsgemäße Vorrichtung ist es also möglich, einen selbst unter Wasser befindlichen Bereich des Bodens mit Klebstoff ferngesteuert zu reparieren. Ein Ablassen des kontaminierten Wassers ist daher entbehrlich. Mittels der Führungsvorrichtung kann der Träger, an dem der Schwenkarm und das Aufnahmeelement angeordnet sind, zu der schadhaften Stelle bewegt werden, so dass schließlich der in dem Aufnahmeelement befindliche Klebstoff den Schaden abdichten kann, ohne dass eine Person das Innere des Behälters betreten muss. Mit anderen Worten bildet die Führungsvorrichtung in einer Arbeitsstellung eine Transportstrecke über die der Klebstoff von einem von einer Person zugänglichen Ort zu der schadhaften Stelle transportiert werden kann.

Bei einer bevorzugten Ausführungsform der Erfindung ist die Führungsvorrichtung durch einen Mast gebildet, der sich in einer Arbeitsstellung von der Öffnung in der Oberseite des Behälters bis zu dessen Boden erstreckt.

Ist der Mast aus mehreren einzelnen Mastelementen gebildet, kann dieser den gewünschten Maßen, insbesondere Höhen des zu reparierenden Behälters angepasst werden. Durch die Verwendung einer unterschiedlichen Anzahl und/oder unterschiedlich langer Mastelemente kann der Mast individuell auf den jeweiligen Einzelfall angepasst werden.

Die Zentriervorrichtung weist bevorzugt zwei schwenkbare Flügel auf, an denen jeweils Fixierelemente angeordnet sind, die gegen die Wandabschnitte gedrückt werden können.

Die Fixiervorrichtung wird in einer bevorzugten Ausgestaltung der Erfindung durch einen Magneten oder einen Vakuumsauger gebildet.

Das Herablassen des Trägers und das Schwenken der Schwenkarme können mittels eines Seilzuges erfolgen.

Damit der Träger mit dem Schwenkarm und dem Aufnahmeelement durch eine möglichst kleine Öffnung geführt werden kann, ist das Aufnahmeelement zwischen einer Transportstellung, in der es senkrecht zur Ebene des Bodens ausgerichtet ist und einer Arbeitsstellung, in der es parallel zur Ebene des Bodens ausgerichtet ist, drehbar angeordnet. In der Transportstellung ist das Aufnahmeelement, das beispielsweise durch ein längliches U-Profil gebildet sein kann, daher in einer vertikalen Position, in der es leicht durch eine Öffnung bewegt werden kann. Um den Klebstoff dann an der schadhaften Stelle zu positionieren, wird das Aufnahmeelement erst innerhalb des Behälters um 90° in eine horizontale Position gedreht, in der es parallel zur Ebene des Bodens des Behälters ausgerichtet ist.

Damit die Vorrichtung nach dem Reparaturvorgang wieder aus dem Behälter entfernt werden kann, ist das Aufnahmeelement mittels eines Entriegelungsmechanismus vom Schwenkarm lösbar. Das Aufnahmeelement mit Klebstoff verbleiben somit an der reparierten schadhaften Stelle

Damit unterschiedliche Stellen der Wandabschnitte von dem Aufnahmeelement und Klebstoff erreicht werden können, ist zwischen Schwenkarm und Aufnahmeelement ein Bewegungselement angeordnet, mit dem das Aufnahmeelement in der Arbeitsstellung senkrecht zu dem Schwenkarm und zu der Führungsvorrichtung, also entlang der Wandabschnitte bewegt werden kann. Das Bewegungselement ist vorzugsweise zusammen mit dem Aufnahmeelement drehbar an dem Schwenkarm angeordnet. Das Bewegungselement wird vorzugsweise durch zwei teleskopartig bewegliche Schienen gebildet.

Bei einer weiteren bevorzugten Ausgestaltung der Erfindung umfasst die Vorrichtung zusätzlich eine Kranvorrichtung, welche zum Abstützen sowie Ein- und Ausbringen der Führungsvorrichtung sowie aller weiteren notwendigen Komponenten in den Behälter dient. Die Kranvorrichtung ist dabei so ausgelegt, dass sie die Flächenbelastung der Vorrichtung auf einen vorhandenen Deckel auf ein gewünschtes Maß reduziert. Dazu kann sie beispielsweise eine Bodenplatte aufweisen, mit der das Gewicht der gesamten Vorrichtung auf eine bestimmte Fläche verteilt wird. Auch die einzelnen Teile der Kranvorrichtung sind modular aufgebaut und in Einzelteile zerlegbar.

Zur weiteren Erläuterung der Erfindung wird auf das in den Figuren dargestellte Ausführungsbeispiel verwiesen. Es zeigen:
Fig. 1: Einen Behälter mit der erfindungsgemäßen Vorrichtung vor dem Einführen in den Behälter,
Fig. 2: Einen Ausschnitt aus Fig. 1 mit der erfindungsgemäßen Vorrichtung,
Fig. 3: Die erfindungsgemäße Vorrichtung beim Herablassen in den Behälter,
Fig. 4: Die erfindungsgemäße Vorrichtung während des Zentriervorgangs,
Fig. 5: Einen Ausschnitt aus Fig. 4 mit Zentriervorrichtung,
Fig. 6: Die Zentriervorrichtung,
Fig. 7: Einen Ausschnitt der Führungsvorrichtung mit Träger und Schwenkarmen in einer Transportstellung,
Fig. 8: Den Träger mit Schwenkarmen sowie Aufnahmeelement in einer Arbeitsstellung,
Fig. 9: Den Träger mit ausgeschwenkten Schwenkarmen.

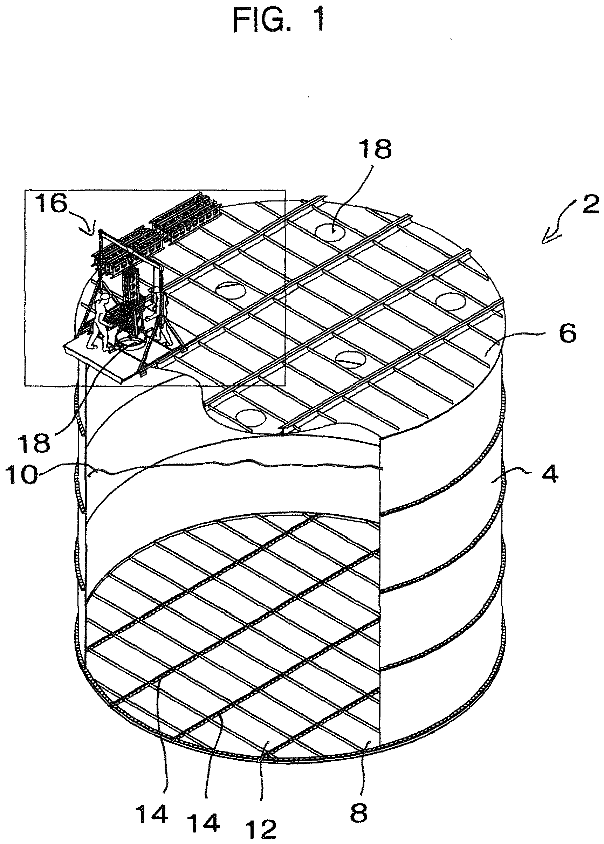

Fig. 1 zeigt einen zylinderförmigen Behälter 2 mit einer Seitenwand 4, einem Deckel 6 und einem Boden 8. Der Behälter 2 ist mit radioaktiv kontaminiertem Wasser 10 gefüllt.

Der Boden 8 des Behälters ist aus einer Mehrzahl von Bodenelementen 12 gebildet, die an zwei gegenüberliegenden Seiten mit Hilfe von sich senkrecht in den Behälter 2 hinein erstreckenden Wandabschnitten 14 zusammengefügt sind. Die jeweils aneinander grenzenden Wandabschnitte 14 zweier benachbarter Bodenelemente 12 bilden dabei einen Flansch, der mittels Schrauben verschraubt werden kann. Insbesondere an diesen Flanschstellen treten nach einer gewissen Lagerzeit des Wassers 10 Schäden auf, die repariert und abgedichtet werden müssen, so dass kein weiteres kontaminiertes Wasser 10 aus dem Behälter 2 in dessen Umgebung auslaufen kann.

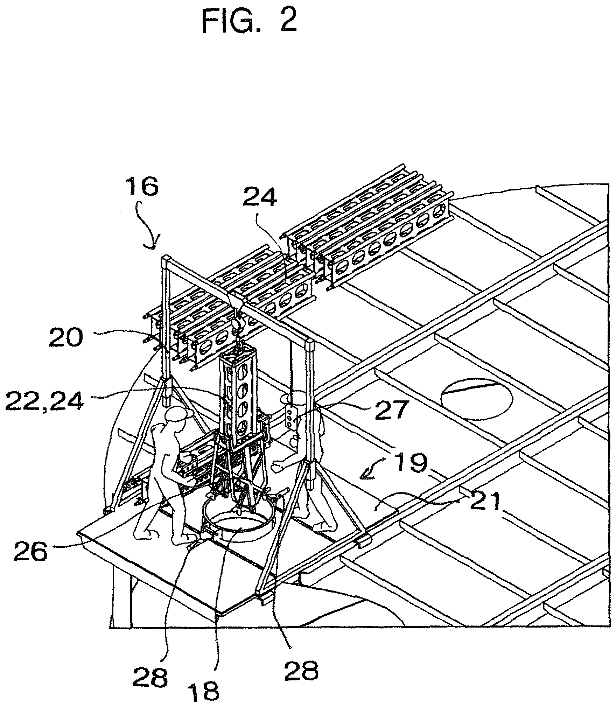

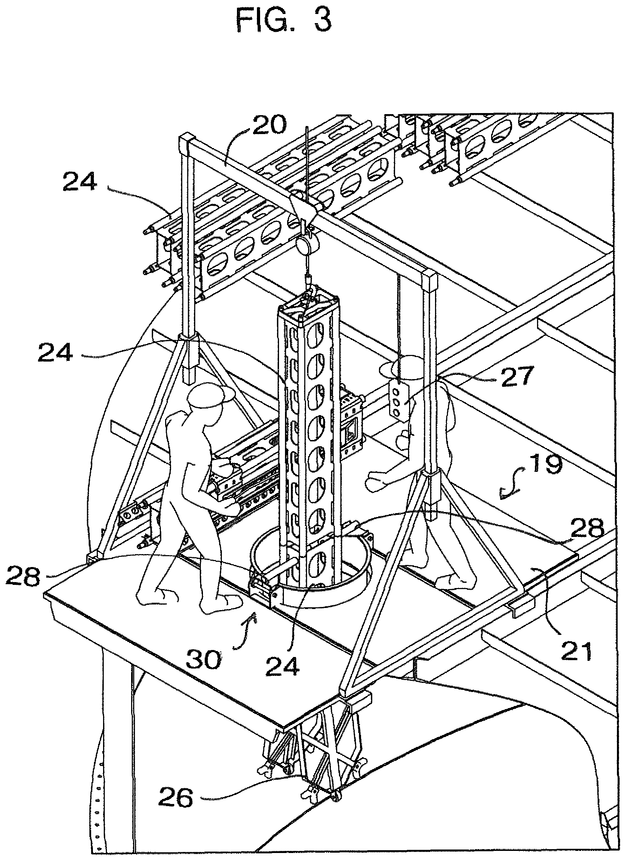

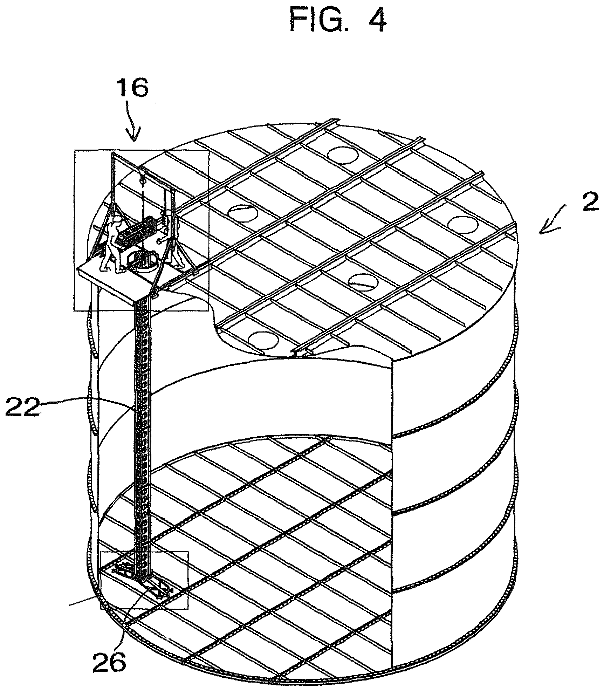

Zur Reparatur des Schadens wird die erfindungsgemäße Vorrichtung 16 eingesetzt, die in Fig. 1 und Fig. 2 in Einzelteilen zerlegt dargestellt ist. Um die Vorrichtung 16 in den Behälter 2 einbringen zu können sind in den Deckel 6 kreisrunde Öffnungen 18 eingebracht worden. Desweiteren wurde oberhalb einer Öffnung 18 eine Kranvorrichtung 19 angeordnet. Diese umfasst wiederum ein Gestell 20 und eine Bodenplatte 21, die auf die Oberseite des Deckels 6 um die Öffnung 18 angeordnet wurde. Die Kranvorrichtung 19 ist dabei modular aufgebaut, so dass sie in ihre einzelnen Komponenten zerlegt werden kann. Die Bodenplatte 21 dient dazu, das Gewicht der gesamten Vorrichtung 16 auf eine bestimmte Fläche zu verteilen, um somit eine bestimmte zulässige Flächenbelastung des Deckels einzuhalten, damit dieser durch das Gewicht nicht eingedrückt wird. An der Kranvorrichtung 19 wird nun ein erstes Teil einer Führungsvorrichtung 22 in Form eines Mastelements 24 angebracht. An dem unteren Ende des Mastelements 24 weist dieses eine Zentriervorrichtung 26 auf. Anschließend wird das Mastelement 24 mit der Zentriervorrichtung 26 durch die Öffnung 18 in den Behälter 2 mittels der Kranvorrichtung 19 herabgelassen. Die gesamte Steuerung des Einbringens der Vorrichtung 16 in den Behälter 2 sowie des Reparaturvorgangs erfolgt mit einem Steuerelement 27. Mittels einer durch zwei in die Öffnung 18 schwenkbare Bolzen 28 gebildeten Haltevorrichtung 30 wird das erste Mastelement 24 in einer vorübergehenden Position gehalten, wie sie in Fig. 3 dargestellt ist. Auf das erste Mastelement 24 kann dann ein weiteres Mastelement 24 gesetzt und mit diesem verbunden werden, wie dies ebenfalls in Fig. 3 dargestellt ist. Es können dann beliebig viele Mastelemente 24 zusammengesetzt werden, so dass die durch die Mastelemente gebildete Führungsvorrichtung 22 in der in Fig. 4 dargestellten Arbeitsstellung vom Boden 8 des Behälters 2 bis über die Öffnung 18 reicht.

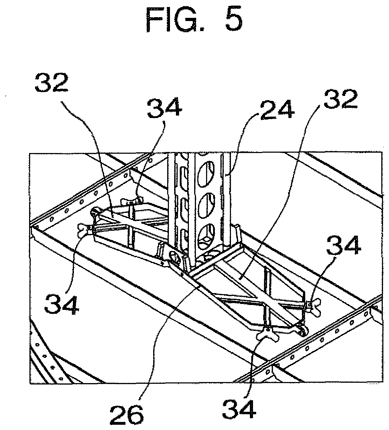

Bei weiterem Herablassen der Führungsvorrichtung 22 berührt nun die Zentriervorrichtung 26 als erstes den Boden 8 des Behälters 2, wie es in Fig. 4 und Fig. 5 dargestellt ist. In dargestelltem Ausführungsbeispiel weist die Zentriervorrichtung 26 zwei schwenkbare Flügel 32 auf. Diese werden durch die Berührung mit dem Boden 8 derart aufgeschwenkt, dass sie parallel zu der Ebene des Bodens 8 liegen.

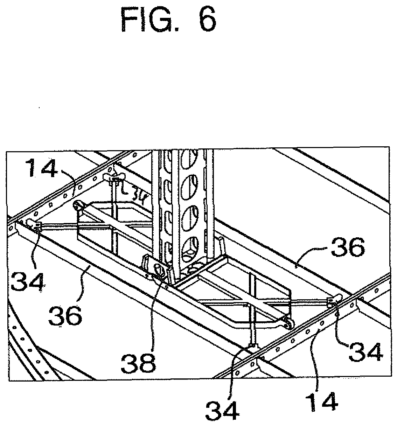

An den Flügeln 32 der Zentriervorrichtung 26 sind jeweils zwei Fixierelemente 34 angeordnet, die beispielsweise mittels Hydraulik, Pneumatik oder einem Motor gegen die Wandabschnitte 14 sowie weitere Querstreben 36 gedrückt werden können. Eine derartige Situation ist in Fig. 6 dargestellt. Durch das symmetrische Herausbewegen der einzelnen Fixierelemente 34 wird somit die Führungsvorrichtung 22 hinsichtlich eines Bodenelements 12 zentriert. Die Führungsvorrichtung 22 ist somit über dem Mittelpunkt des Bodenelements 12 angeordnet. In dieser Position wird dann die Führungsvorrichtung 22 mit einer Fixiervorrichtung 38 am Boden 8 des Behälters 2 fixiert. Eine derartige Fixiervorrichtung 38 kann beispielsweise durch Magnete oder Vakuumsauger gebildet werden. Sodann werden die Fixierelemente 34 wieder in ihre ursprüngliche Stellung innerhalb der Zentriervorrichtung 26 zurückbewegt, damit diese für den weiteren Reparaturvorgang nicht im Wege stehen.

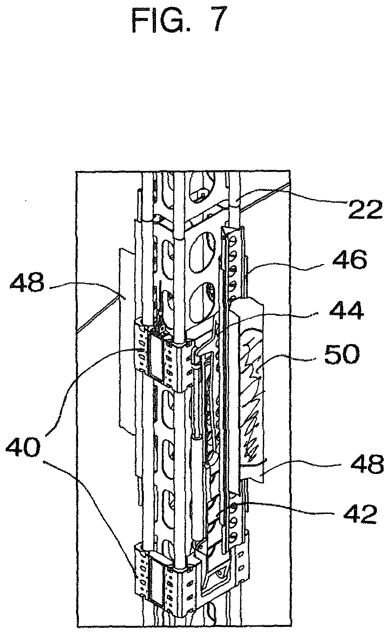

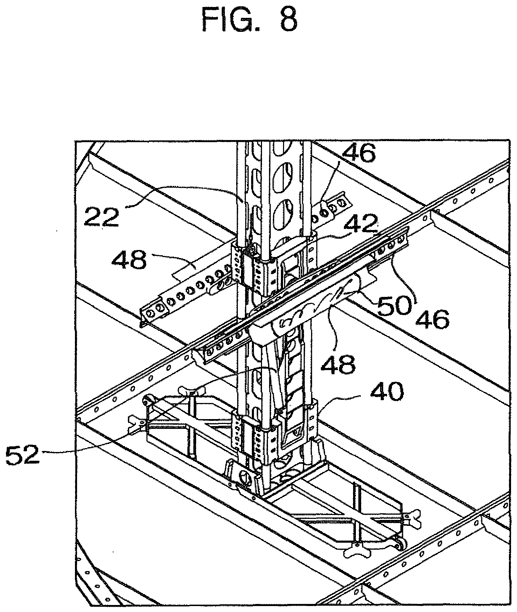

Als nächstes wird an der Führungsvorrichtung 22 ein durch zwei Schlitten gebildeter Träger 40 herabgelassen, an dem in diesem Fall zwei gegenüberliegende Schwenkarme 42 angeordnet sind, von denen in Fig. 7 und Fig. 8 jedoch nur einer sichtbar ist.

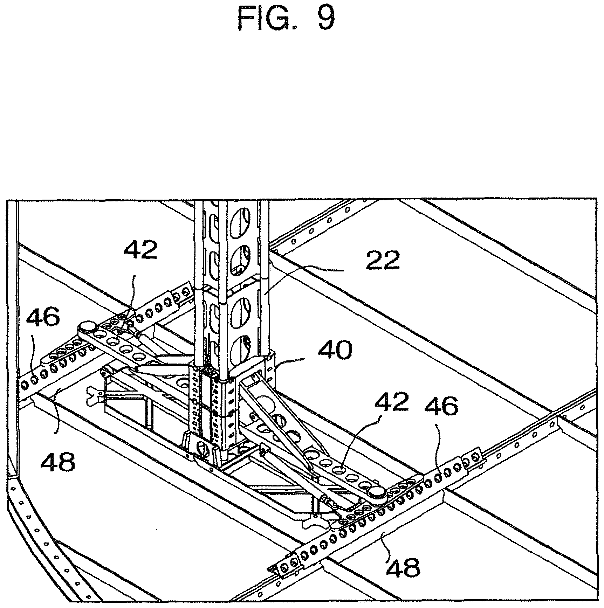

Die Schwenkarme 42 sind an dem Träger 40 zwischen einer in Fig. 7 und Fig. 8 gezeigten Transportstellung, in der beide senkrecht zur Ebene des Bodens ausgerichtet sind und einer in Fig. 9 gezeigten Arbeitsstellung, in der sie parallel zur Ebene des Bodens 8 verlaufen, schwenkbar angeordnet. An dem Freiende 44 des Schwenkarms 42 ist weiterhin ein Bewegungselement 46 in Form zweier teleskopartig verfahrbarer Schienen angeordnet, wobei an einer der Schienen ein Aufnahmeelement 48 in Form eines U-Profils angeordnet ist, welches Klebstoff 50 aufnehmen kann.

In Fig. 7 befinden sich sowohl der Schwenkarm 42 als auch das Aufnahmeelement 48 mit Bewegungselement 46 in einer jeweiligen Transportstellung, in der diese senkrecht zur Ebene des Bodens 8 ausgerichtet sind. Dadurch wird ermöglicht, dass der Träger 40 mitsamt dem Schwenkarm 42 sowie dem Aufnahmeelement 48 durch die Öffnung 18 in den Behälter 2 eingebracht werden kann.

Nachdem der Träger 40 mit Schwenkarmen 42 und den mit Klebstoff 50 bestückten Aufnahmeelementen 48 in den Behälter 2 eingebracht worden ist, wie es Fig. 8 gezeigt ist, wird das Bewegungselement 46 mitsamt dem Aufnahmeelement mit Hilfe eines Zylinders 52 um 90° gedreht, so dass es sich in einer Arbeitsstellung befindet, in der es parallel zur Ebene des Bodens 8 verläuft. Anschließend wird der Schwenkarm 42 ebenfalls in eine Arbeitsstellung geschwenkt, in der er ebenfalls parallel zur Ebene des Bodens 8 verläuft, wie es in Fig. 9 dargestellt ist. In dieser Situation bedeckt das Aufnahmeelement 48 mit Klebstoff 50 die schadhafte Stelle und dichtet diese ab. Mittels eines Entriegelungsmechanismus wird das Aufnahmeelement 48 von dem Bewegungselement 46 gelöst, so dass der Schwenkarm 42 wiederum in die Transportstellung geschwenkt werden kann. Auf umgekehrte Art und Weise kann nun der Träger 40 wiederum mittels eines Seilzuges nach oben durch die Öffnung 18 aus dem Behälter 2 entfernt werden. Ebenso kann die Führungsvorrichtung 22 aus dem Behälter 2 gezogen und zur Reparatur an einer weiteren Stelle verwendet werden.

Die gesamte Reparatur der schadhaften Stelle erfolgt somit ferngesteuert, ohne dass eine Person in den Behälter 2 einsteigen muss. Desweiteren muss auch das im Behälter 2 befindliche Wasser 10 nicht abgelassen werden.

## Patentansprüche

1. Vorrichtung (16) zur Reparatur eines Schadens an einem durch eine Mehrzahl von Bodenelementen (12) gebildeten Boden (8) eines mit Wasser (10) gefüllten Behälters (2), umfassend
- eine auf dem Boden (8) des Behälters (2) platzierbare Führungsvorrichtung (22), die eine Zentriervorrichtung (26) zur Zentrierung der Führungsvorrichtung (22) zwischen Wandabschnitten (14) der Bodenelemente (12) und eine Fixiervorrichtung (38) zur Fixierung der Führungsvorrichtung (22) auf dem Boden (8) des Behälters (2) aufweist,
- einen entlang der Führungsvorrichtung (22) führbaren Träger (40), an dem mindestens ein Schwenkarm (42), der zwischen einer senkrecht zur Ebene des Bodens (8) ausgerichteten Transportstellung und einer parallel zur Ebene des Bodens (8) verlaufenden Arbeitsstellung schwenkbar angeordnet ist,
- ein an einem Freiende (44) des Schwenkarms (42) angeordnetes Aufnahmeelement (48) zur Aufnahme von Klebstoff (50), mit dem ein Teil eines Wandabschnittes (14) der Bodenelemente (12) überdeckbar ist.

2. Vorrichtung (16) nach Anspruch 1, bei der die Führungsvorrichtung (22) durch einen Mast gebildet ist, der sich von der Oberseite des Behälters (2) bis zum Boden (8) erstreckt.

3. Vorrichtung (16) nach Anspruch 2, bei der der Mast aus mehreren Mastelementen (24) gebildet ist.

4. Vorrichtung (16) nach einem der vorhergehenden Ansprüche, bei der die Zentriervorrichtung (26) zwei schwenkbare Flügel (32) aufweist, an denen jeweils Fixierelemente (34) angeordnet sind, die gegen die Wandabschnitte (14) gedrückt werden können.

5. Vorrichtung (16) nach einem der vorhergehenden Ansprüche, bei der die Fixiervorrichtung (38) einen Magneten oder einen Vakuumsauger umfasst.

6. Vorrichtung (16) nach einem der vorhergehenden Ansprüche, welche einen Seilzug zum Herablassen des Trägers (40) und Schwenken der Schwenkarme (42) umfasst.

7. Vorrichtung (16) nach einem der vorhergehenden Ansprüche, bei der das Aufnahmeelement (48), zwischen einer Transportstellung, in der es senkrecht zur Ebene des Bodens (8) ausgerichtet ist und einer Arbeitsstellung, in der es parallel zur Ebene des Bodens (8) ausgerichtet ist, drehbar angeordnet ist.

8. Vorrichtung (16) nach einem der vorhergehenden Ansprüche, bei der mittels eines Entriegelungsmechanismus das Aufnahmeelement (48) von dem Schwenkarm (42) lösbar ist.

9. Vorrichtung (16) nach einem der vorhergehenden Ansprüche, bei dem zwischen Schwenkarm (42) und Aufnahmeelement (48) ein Bewegungselement (46) angeordnet ist, mit dem das Aufnahmeelement (48) in der Arbeitsstellung senkrecht zu dem Schwenkarm (42) und zu der Führungsvorrichtung (22) bewegt werden kann.

10. Vorrichtung (16) nach einem der vorhergehenden Ansprüche, die eine Kranvorrichtung (19) umfasst, welche zum Abstützen sowie Ein- und Ausbringen der Führungsvorrichtung (22) in den Behälter (2) dient.

## Claims

1. Device (16) for repairing damage to a base (8), formed by a plurality of base elements (12), of a container (2) filled with water (10), comprising
- a guiding device (22) which can be placed on the base (8) of the container (2), which has a centring device (26) for centring the guiding device (22) between wall portions (14) of the base elements (12) and a fixing device (38) for fixing the guiding device (22) on the base (8) of the container (2),
- a carrier (40) which can be guided along the guiding device (22), on which at least one pivot arm (42) is pivotably arranged between a transport position orientated perpendicular to the plane of the base (8) and an operating position running parallel to the plane of the base (8),
- a receiving element (48) which is arranged on a free end (44) of the pivot arm (42) for receiving adhesive (50), with which a part of a wall portion (14) of the base elements (12) can be covered.

2. Device (16) according to claim 1, in which the guiding device (22) is formed by a pole which extends from the upper side of the container (2) to the base (8).

3. Device (16) according to claim 2, in which the pole is formed from several pole elements (24).

4. Device (16) according to one of the preceding claims, in which the centring device (26) has two pivotable wings (32), on which respective fixing elements (34) are arranged, which can be pressed against the wall portions (14).

5. Device (16) according to one of the preceding claims, in which the fixing device (38) comprises a magnet or a vacuum exhauster.

6. Device (16) according to one of the preceding claims, which comprises a cable line for lowering the carrier (40) and pivoting the pivot arm (42).

7. Device (16) according to one of the preceding claims, in which the receiving element (48) is rotatably arranged between a transport position in which it is orientated perpendicular to the plane of the base (8) and an operating position in which it is orientated parallel to the plane of the base (8).

8. Device (16) according to one of the preceding claims, in which the receiving element (48) can be released from the pivot arm (42) by means of an unlocking mechanism.

9. Device (16) according to one of the preceding claims, in which a movement element (46) is arranged between pivot arm (42) and receiving element (48), with which the receiving element (48) in the operating position can be moved perpendicular relative to the pivot arm (42) and the guiding device (22).

10. Device (16) according to one of the preceding claims, which comprises a crane device (19) which serves for supporting, as well as inserting and extracting, the guiding device (22) in the container (2).

## Revendications

1. Dispositif (16) pour la réparation d'un dommage sur un fond (8), formé par une pluralité d'éléments de fond (12), d'un conteneur (2) rempli d"eau (10), comprenant
- un dispositif de guidage (22) pouvant être placé sur le fond (8) du conteneur (2) et présentant un dispositif de centrage (26), destiné au centrage du dispositif de guidage (22) entre les segments de paroi (14) des éléments de fond (12) et un dispositif d'immobilisation (38) pour l'immobilisation du dispositif de guidage (22) sur le fond (8) du conteneur (2),
- un support (40) pouvant être guidé le long du dispositif de guidage (22) et sur lequel est disposé au moins un bras pivotant (42) pouvant pivoter entre une position de transport perpendiculaire au plan du fond (8) et une position de travail parallèle au plan du fond (8),
- un élément de réception (48) disposé sur une extrémité libre (44) du bras pivotant (42) destiné à recevoir un adhésif (50) avec lequel une partie d'un segment de paroi (14) des éléments de fond (12) peut-être recouverte.

2. Dispositif (16) selon la revendication 1, dans lequel le dispositif de guidage (22) est formé d'un mât qui s'étend depuis le dessus du conteneur (2) jusqu'au fond (8).

3. Dispositif (16) selon la revendication 2, dans lequel le mât est formé de plusieurs éléments de mât (24).

4. Dispositif (16) selon l'une quelconque des revendications précédentes, dans lequel le dispositif de centrage (26) présente deux ailettes pivotantes (32), sur chacune desquelles des éléments d'immobilisation (34) sont disposés et peuvent être pressés contre les segments de paroi (14).

5. Dispositif (16) selon l'une quelconque des revendications précédentes, dans lequel le dispositif d'immobilisation (38) comprend un aimant ou une ventouse.

6. Dispositif (16) selon l'une quelconque des revendications précédentes comportant un câble Bowden pour faire descendre le support (40) et pivoter les bras pivotants (42).

7. Dispositif (16) selon l'une quelconque des revendications précédentes, dans lequel l'élément de réception (48) est disposé de manière à tourner entre une position de transport, dans laquelle il est perpendiculaire au plan du fond (8), et une position de travail dans laquelle il est parallèle au plan de ce dernier (8).

8. Dispositif (16) selon l'une quelconque des revendications précédentes, dans lequel l'élément de réception (48) du bras pivotant (42) est amovible au moyen d'un mécanisme de déverrouillage.

9. Dispositif (16) selon l'une quelconque des revendications précédentes, dans lequel est disposé, entre le bras pivotant (42) et l'élément de réception (48), un élément de déplacement (46) permettant de déplacer l'élément de réception (48) se trouvant en position de travail perpendiculairement au bras pivotant (42) et au dispositif de guidage (22).

10. Dispositif (16) selon l'une quelconque des revendications précédentes comprenant un dispositif de levage (19) qui sert à soutenir ainsi qu'à faire entrer le dispositif de guidage (22) dans le conteneur (2) et de l'en faire sortir.
